# EUROPEAN PATENT APPLICATION

(11) **EP 3 477 461 A1**
(43) Date of publication of application: **01.05.2019**
(21) Application number: 18192837.5
(22) Date of filing: 05.09.2018
(51) Int. Cl.: G06F 3/06, G06F 13/16

(54) **DEVICES AND METHODS FOR DATA STORAGE MANAGEMENT**

(30) Priority: 26.10.2017 US 201715794013
(71) Applicant: INTEL Corporation, Santa Clara, CA 95054 (US)
(72) Inventor: TRIKA, Sanjeev, Portland, OR Oregon 97229 (US)
(74) Representative: Viering, Jentschura & Partner mbB Patent- und Rechtsanwälte

(57) **Abstract**

According to various aspects, methods and devices configured for data storage management, including managing one or more queues each comprising a plurality of pending input/outputs (I/Os) for writing to or reading from a data storage arrangement, each pending I/O having a respective priority according to an I/O priority scheme; receiving a new I/O; assigning a priority to the new I/O according to the I/O priority scheme; selecting a queue from the one or more queues and modifying the queue to add the new I/O, wherein the queue's selection and the new I/O's position in the queue is based on its assigned priority; and executing the I/Os of the one or more queues as modified.

## Description

### Technical Field

Various embodiments relate generally to data storage arrangements and methods.

### Background

As modern technologies become more reliant on vast amounts of data acquired from multiple components of a network infrastructure, efficient methods and devices for efficiently handling the data will be needed to accommodate the ever-increasing data volume and data traffic. For example, devices and methods for more efficiently storing and processing data will be needed to provide increased performance for a wide range of applications. In modern data storage systems, data stored remotely, e.g. at one or more storage systems apart from the actual location of the user of the data, i.e. in datacenters, needs to be easily accessible in order to improve overall system performance.

Key-Value (KV) storage (i.e. Object storage) is a large and fast growing way for storing data in datacenters. It is typically implemented using Log Structure Merge (LSM) trees or other tree-based variants, e.g. binary trees, B+ trees, etc.

### Brief Description of the Drawings

Throughout the drawings, it should be noted that like reference numbers are used to depict the same or similar elements, features, and structures. The drawings are not necessarily to scale, emphasis instead generally being placed upon illustrating the principles of the invention. In the following description, various embodiments of the invention are described with reference to the following drawings, in which:
FIG. **1** shows a diagram for a data storage scheme and a schematic diagram of one or more data storage media according to some aspects;
FIG. **2** shows computing system according to some aspects;
FIG. **3** shows a schematic block diagram illustrating components of controller according to some aspects;
FIG. **4** shows an NVMe architecture according to some aspects;
FIG. **5** shows a schematic diagram of prioritization module in some aspects;
FIG. **6** shows a shows a schematic diagram of a communication system according to some aspects;
FIG. **7** shows a schematic diagram of an internal configuration of controller according to some aspects; and
FIG. **8** shows a flowchart according to some aspects.

### Description

The following detailed description refers to the accompanying drawings that show, by way of illustration, specific details and embodiments in which the invention may be practiced. These embodiments are described in sufficient detail to enable those skilled in the art to practice the invention. Other embodiments may be utilized and structural, logical, and electrical changes may be made without departing from the scope of the invention. The various embodiments are not necessarily mutually exclusive, as some embodiments can be combined with one or more other embodiments to form new embodiments. Various embodiments are described in connection with methods and various embodiments are described in connection with devices. However, it may be understood that embodiments described in connection with methods may similarly apply to the devices, and vice versa.

The word "exemplary" is used herein to mean "serving as an example, instance, or illustration". Any embodiment or design described herein as "exemplary" is not necessarily to be construed as preferred or advantageous over other embodiments or designs.

The terms "at least one" and "one or more" may be understood to include any integer number greater than or equal to one, i.e. one, two, three, four, [...], etc. The term "a plurality" may be understood to include any integer number greater than or equal to two, i.e. two, three, four, five, [...], etc.

The phrase "at least one of' with regard to a group of elements may be used herein to mean at least one element from the group consisting of the elements. For example, the phrase "at least one of' with regard to a group of elements may be used herein to mean a selection of: one of the listed elements, a plurality of one of the listed elements, a plurality of individual listed elements, or a plurality of a multiple of listed elements.

The words "plural" and "multiple" in the description and the claims expressly refer to a quantity greater than one. Accordingly, any phrases explicitly invoking the aforementioned words (e.g., "a plurality of [objects]," "multiple [objects]") referring to a quantity of objects expressly refers more than one of the said objects. The terms "group (of)," "set [of]," "collection (of)," "series (of)," "sequence (of)," "grouping (of)," etc., and the like in the description and in the claims, if any, refer to a quantity equal to or greater than one, i.e. one or more.

The term "data" as used herein may be understood to include information in any suitable analog or digital form, e.g., provided as a file, a portion of a file, a set of files, a signal or stream, a portion of a signal or stream, a set of signals or streams, a key and/or value used in KV database, and the like. Further, the term "data" may also be used to mean a reference to information, e.g., in form of a pointer.

The terms "circuit" or "circuitry" as used herein are understood as any kind of logic-implementing entity, which may include special-purpose hardware or a processor executing software. A circuit may thus be an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions which will be described below in further detail may also be understood as a "circuit". It is understood that any two (or more) of the circuits detailed herein may be realized as a single circuit with substantially equivalent functionality, and conversely that any single circuit detailed herein may be realized as two (or more) separate circuits with substantially equivalent functionality. Additionally, references to a "circuit" may refer to two or more circuits that collectively form a single circuit. The term "circuit arrangement" may refer to a single circuit, a collection of circuits, and/or an electronic device composed of one or more circuits.

The term "processor" or "controller" as for example used herein may be understood as any kind of entity that allows handling data. The data may be handled according to one or more specific functions executed by the processor or controller. Further, a processor or controller as used herein may be understood as any kind of circuit, e.g., any kind of analog or digital circuit. The term "handle" or "handling" as for example used herein referring to data handling, file handling or request handling may be understood as any kind of operation, e.g., an I/O operation, as for example, storing (also referred to as writing) and reading, or any kind of logic operation.

A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

In current technologies, differences between software and hardware implemented data handling may blur, so that it has to be understood that a processor, controller, or circuit detailed herein may be implemented in software, hardware or as hybrid implementation including software and hardware.

The term "software" refers to any type of executable instruction, including firmware.

The term "system" (e.g., a storage system, a server system, client system, guest system etc.) detailed herein may be understood as a set of interacting elements, wherein the elements can be, by way of example and not of limitation, one or more mechanical components, one or more electrical components, one or more instructions (e.g., encoded in storage media), one or more processors, and the like.

The term "storage" (e.g., a storage device, a primary storage, storage system, etc.) detailed herein may be understood as any suitable type of memory or memory device, e.g., one or more of a solid state drive (SSD), hard disk drive (HDD), redundant array of independent disks (RAID), direct-connected NVM device, etc., or any combination thereof.

The term "cache storage" (e.g., a cache storage device) or "cache memory" detailed herein may be understood as any suitable type of fast accessible memory or memory device, a solid-state drive (SSD), and the like. According to various embodiments, a cache storage device or a cache memory may be a special type of storage device or memory with a high I/O performance (e.g., a great read/write speed, a low latency, etc.). In general, a cache device may have a higher I/O performance than a primary storage, wherein the primary storage may be in general more cost efficient with respect to the storage space. According to various embodiments, a storage device may include both a cache memory and a primary memory. According to various embodiments, a storage device may include a controller for distributing the data to the cache memory and a primary memory.

As used herein, "memory," "memory device," and the like may be understood as a non-transitory computer-readable medium in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D crosspoint (3DXP), etc., or any combination thereof. Furthermore, it is appreciated that registers, shift registers, processor registers, data buffers, etc., are also embraced herein by the term memory. It is appreciated that a single component referred to as "memory" or "a memory" may be composed of more than one different type of memory, and thus may refer to a collective component comprising one or more types of memory. It is readily understood that any single memory component may be separated into multiple collectively equivalent memory components, and vice versa. Furthermore, while memory may be depicted as separate from one or more other components (such as in the drawings), it is understood that memory may be integrated within another component, such as on a common integrated chip.

A volatile memory may be a storage medium that requires power to maintain the state of data stored by the medium. Non-limiting examples of volatile memory may include various types of RAM, such as dynamic random access memory (DRAM) or static random access memory (SRAM). One particular type of DRAM that may be used in a memory module is synchronous dynamic random access memory (SDRAM). In some aspects, DRAM of a memory component may comply with a standard promulgated by Joint Electron Device Engineering Council (JEDEC), such as JESD79F for double data rate (DDR) SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4 (these standards are available at www.jedec.org). Such standards (and similar standards) may be referred to as DDR-based standards and communication interfaces of the storage devices that implement such standards may be referred to as DDR-based interfaces.

Various aspects may be applied to any memory device that comprises non-volatile memory. In one aspect, the memory device is a block addressable memory device, such as those based on negative-AND (NAND) logic or negative-OR (NOR) logic technologies. A memory may also include future generation nonvolatile devices, such as a 3DXP memory device, or other byte addressable write-in-place nonvolatile memory devices. A 3DXP memory may comprise a transistor-less stackable cross-point architecture in which memory cells sit at the intersection of word lines and bit lines and are individually addressable and in which bit storage is based on a change in bulk resistance.

In some aspects, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magneto resistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. The terms memory or memory device may refer to the die itself and/or to a packaged memory product.

Unless explicitly specified, the term "transmit" encompasses both direct (point-to-point) and indirect transmission (via one or more intermediary points). Similarly, the term "receive" encompasses both direct and indirect reception. Furthermore, the terms "transmit", "receive", "communicate", and other similar terms encompass both physical transmission (e.g., the transmission of radio signals) and logical transmission (e.g., the transmission of digital data over a logical software-level connection). For example, a processor may transmit or receive data in the form of radio signals with another processor, where the physical transmission and reception is handled by radio-layer components such as RF transceivers and antennas, and the logical transmission and reception is performed by the processor. The term "communicate" encompasses one or both of transmitting and receiving, i.e. unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

Current implementations and methods used for KV storage have poor read performance and Quality of Service (QoS) due to interference of background operations (reads and writes) with the foreground host-read operations (i.e. Client Get commands). In fact, background operations, i.e. background I/Os, are the vast majority of the operations issued by KV algorithms in data storage with read amplification and write amplification ranging from 4 to 400 and 3 to 15, respectively. The methods and devices of this disclosure improve burst read performance and Read-QoS despite high amplification scenarios.

While the description herein may be documented and explained in the context of KV applications running on storage media including solid state drives (SSDs), it applies equally well to other storage media types as well, i.e. Hard Disk Drives (HDDs), redundant array of independent disks (RAIDs), persistent memory, etc.

According to various aspects, a data storage method and data storage arrangement for efficient data storage implementation, including one or more storage media operatively coupled to one or more processors, the one or more processors configured to maintain one or more queues (either on a host or on the device) comprising a plurality of pending input/outputs (I/Os) on at least one storage medium of the one or more storage media, each pending I/O assigned a respective priority according to an I/O priority scheme; receive one or more new I/Os; assign a priority to the one or more new I/Os according to the I/O priority scheme; modify the one or more queues to add the one or more new I/Os, wherein each of the one or more new I/Os' position in the one or more queues is based on its assigned priority; and process the one or more queues. In the case where a data storage arrangement uses a plurality of queues, more queues may be allocated to higher priority I/Os and fewer queues may be allocated to lower priority I/Os.

According to various aspects, the priority scheme may prioritize client I/Os (i.e. gets or puts received through an application interface) over background operations (e.g. data compaction between lower levels of the data structure). In a further aspect, the priority scheme may optionally prioritize reads over writes, i.e. prioritize Get commands over Put commands. In a further aspect, the priority scheme may optionally prioritize reads and/or writes required for flushing of a Write Ahead Log (WAL) over data transfers between lower levels of memory. In a further aspect, the data scheme may prioritize data transfers (e.g. compaction) between higher levels of memory over data transfers between lower levels of memory.

According to various aspects, the priority schemes may be specifically tailored depending on the storage media that is used. For example, for NVM Express (NVMe) solid state drives (SSDs), the prioritization schemes may be simplified and hardware-accelerated by using a weighted round robin (WRR), or other vendor-specific, mechanism.

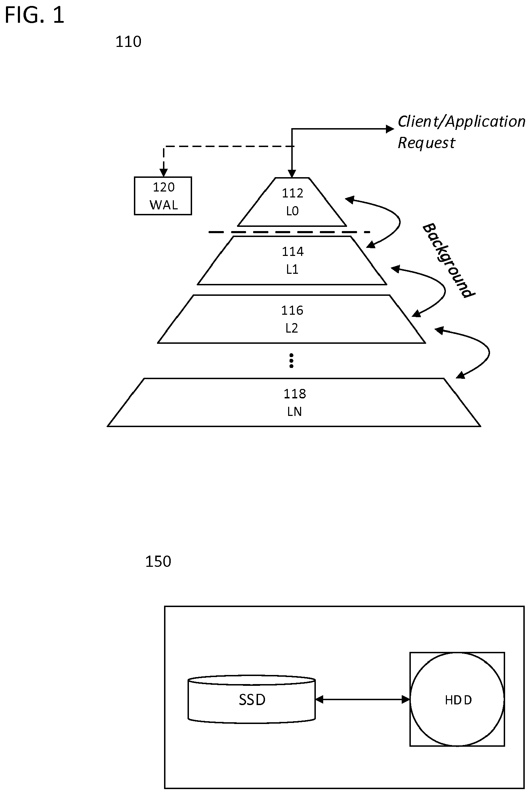

FIG. **1** shows a diagram for a data storage scheme with a tiered structure **100** and a schematic diagram of one or more data storage media **150**. While diagram **100** and the ensuing explanation is detailed with respect to Log-Structured Merge Trees (LSM trees), it is appreciated that the methods and devices of this disclosure may be similarly applicable to other schemes that use tiered/tree level structures and/or relocate data in background operations. It is appreciated that the diagrams shown in FIG. **1** are exemplary in nature and may thus be simplified for the purposes of this explanation.

LSM trees are implemented in data storage and provide an efficient indexing for a KV store with a high rate of inserts and deletes, thereby making them attractive for data streams with a high insert volume such as transactional log data. LSM trees, similarly to other search trees, maintain KV pair data in a plurality of tiers. In order to take full advantage of the benefits offered by LSM tree data storage techniques, the data storage implementations and techniques should be specifically tailored to each storage media in order to maximize system performance. For example, one of the key factors in the data structure design should be an efficient batch synchronization in the storage media, e.g. in an SSD.

LSM trees defer and batch writes into large segments to use the high sequential bandwidth of hard drives. An LSM tree consists of a number of storage components (i.e. tiers) of exponentially increasing sizes, **112-118**. A first component (not pictured) may be resident on host memory as a transient volatile buffer, whereas the other components (Level 0 (L0), Level 1 (L1),...., the Last Level (LN)) **112-118**, are resident on disk. During a Put, the KV pair may first be added to an on-disk sequential log file, i.e. a write ahead log (WAL)

**120**, and then, the KV pair may be added to the transient buffer. This in-memory data buffer containing the Put data does not need to be sorted at all times, it only needs to be sorted when the data is placed on the disk (e.g. a write to L0). For purposes of this disclosure, L0 is the top level of data on storage, i.e. the highest level in the data storage arrangement. Accordingly, in some aspects, the WAL may not need to be flushed to L0 and Priorities 3 and 4 may be removed from Table 1 (discussed later). In this case, the L0 writes to the disk, i.e. writes of the in-memory data buffer after sorting to disk, may be substituted in Table 1 as Priority 3, and the other lower priorities of Table 1 (i.e. disk reads and writes required for compaction) may be shifted up a priority level (e.g. Priority for "Data reads required for compaction of Lᵢ to Lᵢ₊₁" shifted to 4+2i, for i=0 to N-1).

This allows for quick and efficient reads (i.e. Gets) on the most recent inserted KV pairs. Once the first level (i.e. the transient volatile buffer reaches its capacity (or, at a predetermined time), the data is merged onto the top level of disk, i.e. L0 **112**, and sorted. The process by which data from a higher level data structure is merged with a lower level is known as compaction. A newly merged tree (e.g. including data from previous-to-compaction **112** and **114** for compacting data between **112** and **114**) will be written to **114** sequentially. This compaction of data from **112** to **114** happens until **114** reaches a predetermined limit, and then a similar process is performed to move the data to **116**, and so on, i.e. towards **118**. Each data level may be exponentially larger in data capacity than the level previous to it, i.e. lower levels are larger in data capacity than the higher levels, e.g. **116** has a larger storage capacity than **114**.

In order to execute a Get command from the Client/Application, the data storage processor may need to search the multiple levels **112-118** of the LSM tree data storage structure starting at the highest level **112**. However, searching is facilitated since the most recently added data is contained at the higher levels, so, in this manner, more recent and/or dynamic data is more easily accessible. To retrieve a KV pair, the LSM tree algorithm starts to search at the highest level (i.e. **112**) and works its way scanning in the direction of the lower levels (i.e. towards **118**).

In some aspects, reads and/or writes associated with write ahead log (WAL) **120** may be subject to the prioritization methods and algorithms.

The exemplary schematic diagram of data storage media **150** shows a solid state drive (SSD) and a hard disk drive (HDD) working in tandem, but it is appreciated that either may be implemented independently in a data storage system in aspects of this disclosure or may be configured to operate with other types of data storage media types, e.g. RAID, persistent memory, etc. In other aspects, the disclosure herein may be implemented using other storage media types, e.g. RAID, independently of being used with either a SSD or a HDD.

Also, while one SSD and one HDD are shown in **150**, it is appreciated that any number of each (or any other storage media type) may be implemented into the data storage system, i.e. 0, 1, or any number greater than 1.

While the description herein may describe algorithms running on a host and issuing the I/Os to a storage device, it is appreciated that the description is not intended to be solely limited to this configuration and may be similarly implemented to KV algorithms resident inside such storage devices as well. In several aspects, while the KV algorithms are presented in the context of LSM-trees and hash-based algorithms, the KV algorithms are equally applicable to other storage schemes that relocate data in the background and/or use tiered/tree-level structures.

In some aspects, methods, algorithms, and devices provide improve burst read (i.e. Get) performance and read QoS for application issuing KV requests. This is delivered by intelligent prioritization of I/Os by implementing an importance level for different types of reads and writes in LSM (or tree-based) algorithms, and for HashDB algorithms. The priority algorithms presented herein prioritize the high importance reads over less important reads and writes.

In some aspects, new KV algorithm aware policies for prioritizing I/Os issued to the storage media (e.g. SSD) by one or more processors may include: prioritizing client Get commands over Client Put Commands, prioritizing Client Put Commands over I/Os associated with background I/Os (e.g. WAL flush, compaction, relocation, etc.), and background I/Os are prioritized dependent on the corresponding levels involved in data compaction (e.g. prioritize levels with more recent data over levels with older data).

In some aspects, devices and methods for implementing the aforementioned prioritization algorithms specific to hardware and/or software capabilities are presented, e.g. a weighted round robin (WRR) for NVMe SSD to enforce I/O prioritization capabilities while preventing starvation, for a data storage arrangement including storage media with a plurality of queues.

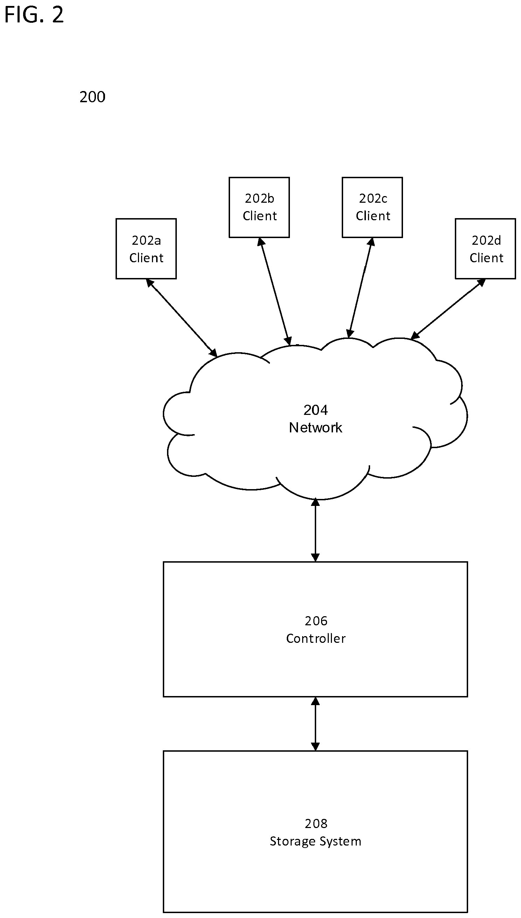

FIG. **2** shows a computing system **200** according to some aspects. It is appreciated that computing system **200** is exemplary in nature and may thus be simplified for purposes of this disclosure.

Clients **202a-202d** may be host devices (e.g. computers, mobile equipment, sensors, cameras, etc.) which are, generally, any device configured to provide and/or request data to/from the network **204**. Each of clients **202a-202d** may be connected to the network **204** via physical connection (e.g. Ethernet) or wirelessly (e.g. implementing any wireless communication technology, e.g. 5G, LTE, 3G radio access technologies (RATs), Wifi, WiMax, Bluetooth, etc.). Furthermore, each of the clients in the cluster **202a-202d** may be a physical device or a virtual device configured to send Get and/or Put commands to the network **204**.

Network **204** may be configured to operate in accordance with any suitable communication protocol such as wireless communication protocols including but not limited to WiFi, Wireless Gigabit Alliance (WiGig) standard, mmWave standards, communication protocols under Third Generation Partnership Project (3GPP) radio communication technology standards, etc., or other communication standards, e.g. Ethernet, Infiniband, or the like.

Controller **206** may be a single processing unit, or multiple processing units, including one or more microprocessors and one or more system memory components, including a nonvolatile storage memory. If controller **206** is multiple processing units, each may have its own microprocessor and system memory, and be interconnected with other processing units of the controller **206** by a dedicated network within computing system **200**. Storage system **208** may include one or more storage devices, e.g. SSDs, HHDs, RAIDs, etc., which are connected to controller **206** and thereby connected to the network. In another aspect, storage system **208** may be connected directly to network **204**, and controller **206** may operatively configure aspects of storage system **208** through the network **204**. Controller **206** may also be implemented as part of the storage system server (i.e. database server).

Controller **206** may manage storage system **208** either directly (as shown in FIG. **2**) or through the network (not shown). Controller **206** may handle the processing of the write and read requests intended for and/or by storage system **208**. In another aspect, controller **206** may be embedded within storage system **208**, or alternatively, have components which are both external (as shown in FIG. **2**) and internal (not shown) to storage system **208**.

Storage system **208** may include one or more of any suitable storage medium, e.g. SSDs, HDDs, other types of non-volatile random access memory (NVRAM), persistent memory, static random access memory (SRAM), dynamic random access memory (DRAM), etc. In aspects of this disclosure, storage system **208** may include one or more SSDs operating in accordance with NVMe specifications.

Storage system **208** may be configured as a database management system which may use object and/or key-value (KV) pairs to store data. In general, storage system **208** may be configured to use relationship techniques for storing and retrieving data in a tiered or tree-level structure, e.g. log-structured merge (LSM) trees, or in non-tiered systems such as hash tables, e.g. HashDB.

In several aspects, the database may be organized as a collection of "keys" with fields of information, i.e. "values." Between the actual physical data stored on the storage system **208** and clients **202a-202d**, transaction processing is performed by the network **204** with the use of the controller **206**.

Generally, computing system **200** may include any number of clients, controllers, and/or storage systems in a number of configurations, for example, the controller **206** being internal or external to storage system **208**, multiple controllers **206** located in different parts of the computing system **200** for redundancy and/or backup. The configuration of computing system **200** is shown as an exemplary configuration for purposes of clarity, and in other aspects, other suitable system configurations may be chosen.

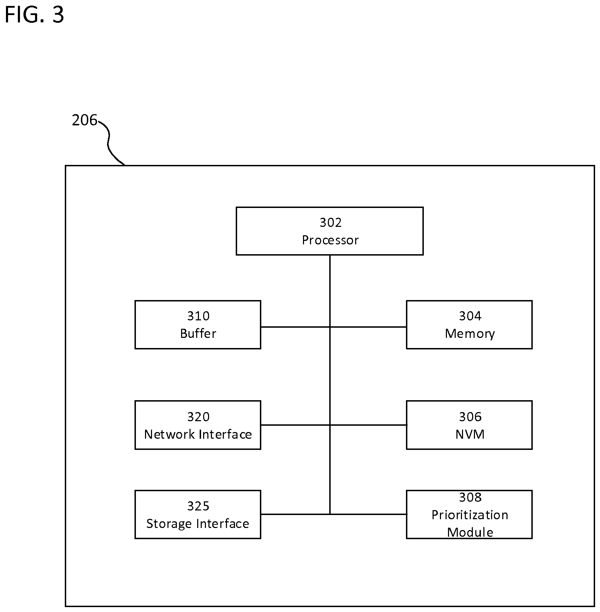

FIG. **3** shows a schematic block diagram illustrating components of controller **206**. It is appreciated that FIG. **3** is exemplary in nature and may thus be simplified for purposes of this explanation.

As described above with respect to FIG. **2**, while controller **206** may be shown as a single unit in FIG. **3**, it is appreciated that the functions of controller **206** may be distributed over a plurality of devices as well, e.g. a controller for assigning priorities to I/Os and a controller for processing a queue of I/Os each with a respective priority, each with its own processor **302** and memory **304**, as well as other components.

Controller **206** is configured to manage the storage system **208**, and accordingly, may be located internally and/or externally to storage system **208**. The memory **304** on controller **206** may store subroutines, executable instructions and other data, which the processor **302** is configured to access for performing the methods and algorithms for prioritizing data storage management as described herein. Memory **304** may include a buffer for buffering write and/or read data. In some aspects, a separate buffer **310** may be configured external to memory **304** and be operatively coupled to the processor **302**.

Controller **206** may also include a non-volatile memory (NVM) **306** component in addition to memory **304** which is also coupled to processor **302**. The NVM **306** may be a persistent cache or cache memory located externally to memory **304** and may be implemented to retain data irrespective of the condition of the power source of controller **206**. The NVM **306** may serve to provide further operational support to controller **206** in order to execute the algorithms and methods described herein.

Prioritization module **308** may include hardware, software, or any combination thereof, and be configured separate to other components of controller **206** (as shown in FIG. **3**), or may be configured in combination with other components of controller **206**, e.g. as one or more sets of subroutines on memory **304** for instructing one or more processors **302** to perform the methods and/or algorithms of this disclosure, or it may be included as instructions on a memory component of processor **302**. In some aspects, prioritization module **308** may include a default prioritization table such as or similar to Table 1 for the prioritization of I/O issued by a key-value (KV) system for a storage system based on LSM trees. In some aspects, one or more look up tables (LUT) may be stored on a memory **304** of controller **206** in order to be able to assign priority to a respective I/O. Accordingly, one or more processors of controller **206** may be configured to access the one or more LUTs in order to assign priorities to the I/Os.

**Table 1: (Default) prioritization of I/O issued by a KV system based on LSM-trees.**

| **I/O Type** | **Priority** (lower number is higher priority) |
|---|---|
| Disk reads required to process client Get commands | 1 |
| Disk writes required to process client Put commands | 2 |
| Disk reads required flushing of Write-Ahead-Log (WAL) to write to Level 0 (L₀) of LSM-tree | 3 |
| Disk writes required for flushing of WAL to L₀ | 4 |
| Disk reads required for compaction of Lᵢ to Lᵢ₊₁ | 5+2i, for i=0 to N-1 |
| Disk writes required for compaction of Lᵢ to Lᵢ₊₁ | 6+2i, for i=0 to N-1 |

In Table 1, the top row, i.e. Disk reads required to process client Get commands, is assigned the highest priority, i.e. 1, and subsequent I/O types are assigned the indicated priority levels in descending priority (i.e. lower priorities indicated by increasing numbers). The top two rows (priority numbers 1 and 2) of Table 1 indicate foreground operations, i.e. commands received directly from the client. The remaining four rows (priority number 3 and greater) indicate background operations, i.e. reads and/or writes for flushing WAL to the first level (L₀) of the LSM-tree structure (priority number 3 and 4), and disks reads and/or writes for compaction from one level to another level (priorities 5 and greater). It is appreciated that priorities may be implemented as needed, for example, WALs are an optional feature, and as such, the priority scheme may be modified to account for when WALs are not implemented.

In some aspects, different priorities may be assigned to different clients (i.e. different priorities may be assigned to clients **202a-202d** of FIG. **2**), different applications, and/or different Virtual machines (VMs), which may be incorporated as sub-priorities to priorities 1 and 2 of Table 1. For example, reads and/or writes from client **202a** may be prioritized over reads and/or writes from client **202b**, so that reads/writes originating from client **202a** will be prioritized over reads/writes from **202b**. For example, this may be done based on the activity of each of the clients (**202a** may be more active in I/O requests than **202b**) or **202a** may be associated with a higher priority application, e.g. safety application, than **202b**. Similarly, certain applications requesting I/Os to the network (e.g. safety applications) may be prioritized over other applications.

Controller **206** may configured to implement/operate prioritization module **308** as a hypervisor/administrator/file-system to customize the prioritization of the I/Os of the different types. For example, if Application B is a higher priority than Application C, then a hypervisor may be configured to override the default prioritization of Table 1 to specify that writes of Application B are a higher priority than reads of Application C, and modify the prioritization parameters of the algorithms accordingly.

In another aspect, an application and/or client may choose to lower or heighten priorities of its own I/Os and notify the network, which may update the prioritization module **308** of the controller **306** accordingly.

For non-tree based algorithms that do background compaction, the default prioritization of the I/Os will be similar to that described in Table 1, where all foreground operations are prioritized over background operations and all background operations are treated as writes to Level -1 (i= -1).

Prioritization module **308** may include a priority assignor and a priority processor, which, if controller is configured as a single unit, may be included in the same prioritization module **308**, or, if controller is configured as multiple separate units, may be included in each of the controller units or may be intelligently allocated in distinct control units.

In some aspects, controller **206** may be configured to apply the prioritization policies, e.g. prioritization shown in Table 1, specific to the hardware of storage system **208**. For example, controller **206** may be configured to implement a starvation prevention mechanism so that background I/Os are not completely disregarded. Accordingly, a scheduling algorithm may be provided as part of the system kernel in order to allocate resources equitably, i.e. resources are allocated so that no I/O priority is perpetually denied execution.

For example, if storage system is configured with SSDs according to NVMe standards, the prioritization may be mapped and hardware-accelerated using weighted round robin (WRR) or other hardware specific mechanisms, e.g. per bits 18:17 of the Controller capabilities (CAP) register, as specified in section 3.1.1 of NVMe spec v1.3. Accordingly, in the example of mapping the prioritization of Table 1 to a WRR mechanism, the resulting I/O prioritization policy may be mapped as shown in Table 2.

**Table 2: Example default mapping of I/O prioritization to NVMe WRR**

| **I/O Priority** | **Submission Queue Number(s)** | **WRR Priority for the Submission Queue(s)** |
|---|---|---|
| 1 | 1,2,3,4 | High |
| 2 | 5,6,7 | High |
| 3 | 8,9 | High |
| 4 | 10 | High |
| 5 | 11,12 | Medium |
| 6 | 13 | Medium |
| 7+i (i=0..2N-3) | Mᵢ to Nᵢ where | Low |
| | M₀ = 14 | |
| | Nᵢ = Mᵢ+(2N-i)-3 | |
| | Mᵢ₊₁ = Nᵢ+1 | |

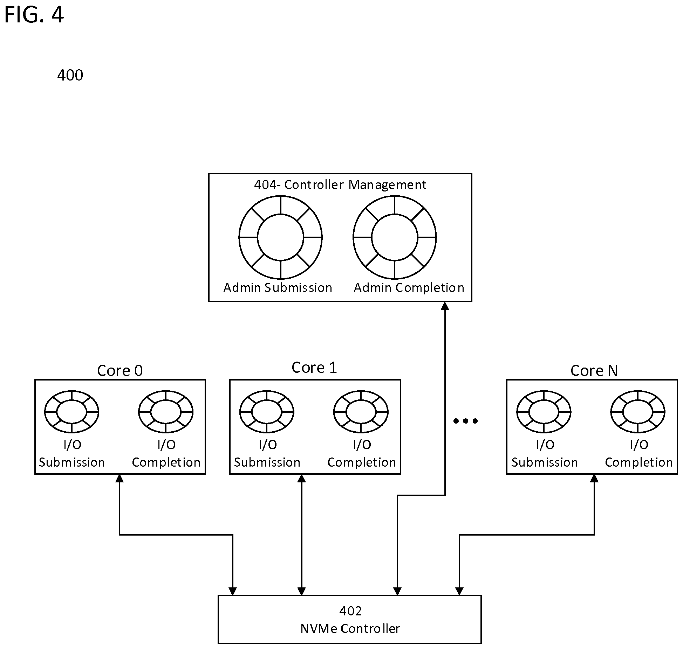

In Table 2, each of the I/O priorities from Table 1 (in Table 2, shown in Column 1) are mapped to the three specific WRR priorities (High, Medium, and Low in Column 3) as described per NVMe standards. In this manner, higher I/O priorities are assigned a higher WRR priority and/or a larger number submission queues. The submission queues numbers in Table 2 may correspond to the I/O submission queues of the Cores in FIG. **4**, e.g. wherein the higher priority submission queues correspond to lower number Core number.

The enforcement of priorities within a WRR priority bucket implementation as demonstrated by Table 2 is achieved by the controller assigning more submission queues to the higher priority I/Os. For example, while both priority 2 and 3 are classified as having high WRR priorities, priority 2 I/Os receive more submission queues than priority 3 I/Os: 2 submission queues as opposed to 1 submission queue, respectively.

In some aspects, enhancements and variations of the priority scheme as mapped specifically to hardware and/or other protocols are implemented. For example, in NVMe, if a device limits the number of submission queues, then multiple priority numbers may be combined, i.e. priorities 1 and 2 may be combined since they are both foreground operations. Additionally, weights for each of the High/Medium/Low priorities and the number of queues per priority may be tailored based on device-specific and/or network-specific considerations in order to achieve higher levels of performance and/or QoS depending on the devices used in the data storage system. Furthermore, the devices and methods of this disclosure may be configured to exploit the WRR Urgent priority feature of NVMe, for example, by providing additional subroutine instructions for the processor of controller to prevent starvation and issue certain priority 1 requests with the urgent priority.

Controller **206** may include buffer **310**, which can optionally be included internal to memory **304** and may be configured to store pending I/O requests for processing. In some aspects, the operability of buffer **310** may be configured specific to the hardware of storage system **208**, e.g. as described with respect to the NVMe standards in order to implement a WRR approach.

Furthermore, controller **206** may include one or more network interfaces **320** configured to communicate with the network according to one or more communication protocols and one or more storage interfaces **325** configured to communicate with the storage system **208** according to one or more protocols, e.g. according to NVMe standards.

FIG. **4** shows an NVMe architecture **400** in some aspects. It is appreciated that NVMe architecture **400** is exemplary and may thus be simplified for purposes of this explanation. NVMe is a logical device interface specification for non-volatile memory storage media (e.g. SSD) attached via a PCI Express or other fabrics. It allows host hardware and software to exploit the levels of parallelism of SSDs, resulting in reduced I/O overhead and improved performance in comparison to previous logical device interfaces. It is appreciated that additional components of NVMe architecture **400**, such as optional MSI-X interfaces between the NVMe controller **402** and the controller management and the cores, may be included but are not shown for purposes of this explanation. In brief, NVMe is a storage protocol for connecting SSDs and controllers over the PCI Express (PCIe) interface.

As shown in NVMe architecture **400**, a plurality of cores are supported, each with an I/O submission queue and completion queue. In this manner, NVMe may process large number of I/Os in parallel. It has a paired submission and competition queue mechanism in host memory, wherein host software places commands in to the submission queue. The NVMe controller **402** places command completions into the corresponding completion queue, wherein multiple I/O submission queues may report completions onto a single common completion queue.

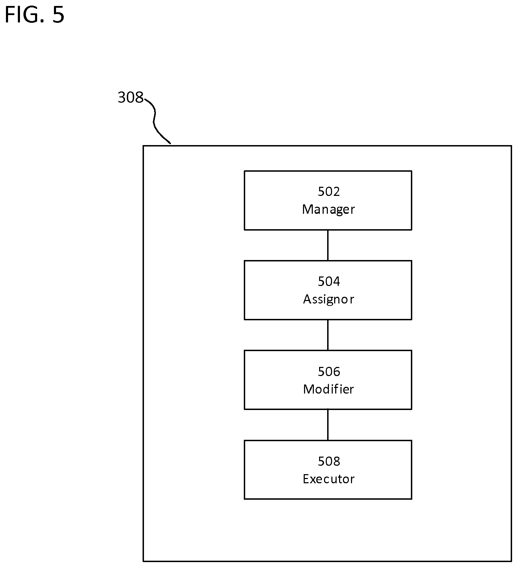

FIG. **5** shows a schematic diagram of prioritization module **308** in some aspects. It is appreciated that FIG. **5** is exemplary in nature and may thus be simplified for purposes of this explanation.

Each of components **502-508** may be implemented as hardware, software, or any combination thereof, and may be locally located in a single controller or distributed across a plurality of controllers functioning in unison with each other.

Manager **502** is configured to manage one or more queues including a plurality of I/Os pending execution for a data storage system. In some aspects, manager **502** may include a buffer component to manage the one or more queues itself, or, in other aspects, manager **502** manages an externally located buffer with the pending I/Os.

Assignor **504** is configured to assign priorities to new I/Os. These I/Os may come from the client/application, or they may come from the data storage system itself in the form of, for example, reads and/or writes necessary for compaction.

Modifier **506** is configured to modify the one or more queues to add the one or more new I/Os based on its assigned priority. The modifier **506** may therefore, for example, be configured to select a queue from one or more queues corresponding to the new I/O's priority, and modify the queue to add the new I/O.

Executor **508** is configured to execute the pending I/Os on the one or more queues as modified by modifier **506**. In this manner, higher priority I/Os may have a higher likelihood of being executed over lower priority I/Os.

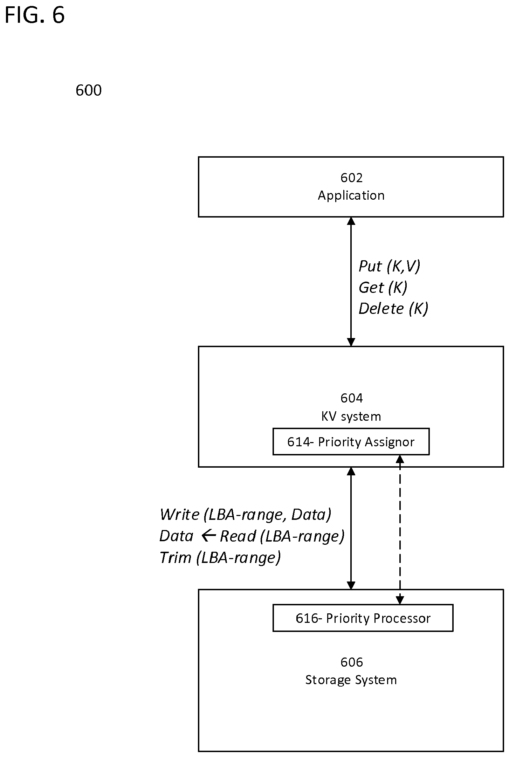

FIG. **6** shows a schematic diagram of a communication system **600** according to some aspects. It is appreciated that FIG. **6** is exemplary in nature and may thus be simplified for purpose of this disclosure.

An application **602** submits, through the network, any one of the following commands to the KV system: a Put command including a key (K) and a corresponding value (V), a Get command including a K, or a Delete command including a K. The KV system **604** (through controller **206**) is configured to receive these client commands (herein, "client command" broadly refers to any commands received from clients, applications, or the like) and assign a priority to each of the respective commands with Priority Assignor **614**. The Priority Assignor **614** is configured to identify whether the respective client command is a read or a write. To identify a command as a Get or Put, the system may identify the command's op-code or detect the op-code via the Application Programming Interface (API) call. For example, if the client command is identified as a Get, then it is assigned a priority of 1 (as a Client Get command per Row 1 of default Table 1), and if the client is identified as a Put, then it is assigned a priority of 2 as a write (as a Client Put command per Row 2 of default Table 1). Accordingly, Priority Assignor **614** may be configured to identify client commands in order to determine which priority to assign them. While not explicitly shown in FIG. **6**, in some aspects, there may be an additional priority assignor in KV system **604** configured to assign priorities to background I/Os prior to adding them to the one or more processing queues.

For example, application **602** may request to Get(Employee X Identification); (note: the "Logical Block Addressing range (LBA-range)" may be mapped to the key in KV storage) . In this case, the Employee X Identification is the key, which is stored in the storage system **606** with the corresponding value for the Employee X Identification. KV system **604**, which may be, for example, any one of a number of well-known KV systems, then assigns this Get request, for example, as Read (sector 1234, priority 1), wherein the sector number (1234) corresponds to the storage system location where the Employee X Identification is and the priority is 1 according the default prioritization of Table 1.

In an exemplary scenario demonstrating the benefits of the methods and algorithms of this disclosure, a baseline scenario is first presented. In the baseline scenario, a KV system may have 20 pending background writes and 30 pending background reads which it has issued to the SSD (i.e. the storage system). The KV system may then receive a new Get command from the application (or the client). The KV system translates that to a Read command to disk, and issues the command. The SSD may provide the data for the read corresponding to the application's Get command only after processing the 50 pending background write and read operations (20 writes + 30 reads) that were previously underway. If each read takes 100 µs and each write takes 1 ms on average, then the application's Get command will have to wait for about 100 µs*30+ 1 ms*20, or approximately 23 ms.

However, by implementing the methods and algorithms of this disclosure, devices are significantly able to improve on this time, and thus improve burst read performance and QoS. Taking the same scenario of the aforementioned baseline example into account (i.e. 20 pending background writes and 30 pending background reads and reception of an application Get command), the KV system translates the application Get command to a read command to disk and issues it as priority 1, thereby moving it to the head of the pending process line ahead of the pending background operations (which have been assigned a lower priority, e.g. as per Table 1) and may provide the data in 100 µs, which is a response time improvement of 230x over the baseline scenario.

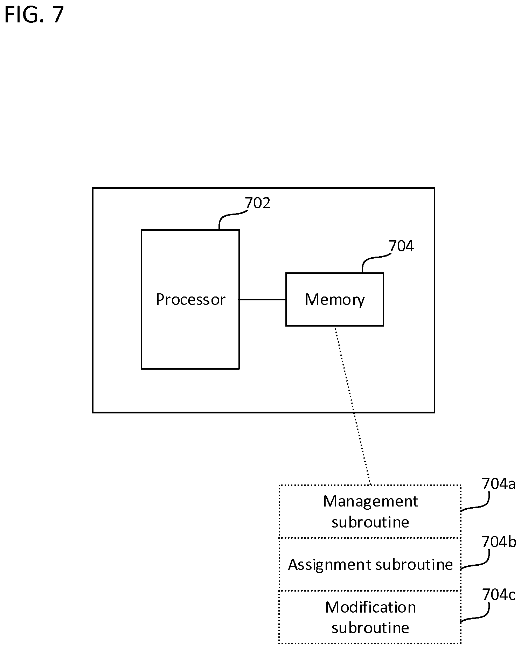

FIG. 7 shows another schematic diagram of an internal configuration of controller **206** according to some aspects. As shown in FIG. **7**, controller **206** may include processor **702** and memory **704**. Processor **702** may be a single processor or multiple processors, and may be configured to retrieve and execute program code to perform the transmission and reception, channel resource allocation, and cluster management as described herein. Processor **602** may transmit and receive data over a software-level connection that is physically transmitted as wireless signals or over physical connections. Memory **704** may be a non-transitory computer readable medium storing instructions for one or more of management subroutine **704a**, an assignment subroutine **704b**, and/or a modification subroutine **704c**.

Management subroutine **704a**, assignment subroutine **704b**, and modification subroutine **704c** may each be an instruction set including executable instructions that, when retrieved and executed by processor **702**, perform the functionality of controller **206** as described herein. In particular, processor **702** may execute management subroutine **704a** to manage one or more queues of pending I/Os; processor **702** may execute assignment subroutine **704b** to assign a priority to one or more new I/Os; and/or processor **702** may execute modification subroutine **704c** to modify the one or more queues to include the one or more new I/Os based on their priority. While shown separately within memory **704**, it is appreciated that subroutines **704a-704c** may be combined into a single subroutine exhibiting similar total functionality, e.g. management subroutine **704a** and modification subroutine **704c** may be merged together into a single subroutine for managing/modifying the one or more queues of pending I/Os. By executing the one or more of subroutines **704a-704c**, a data storage controller may improve burst-read performance and QoS of for data storage.

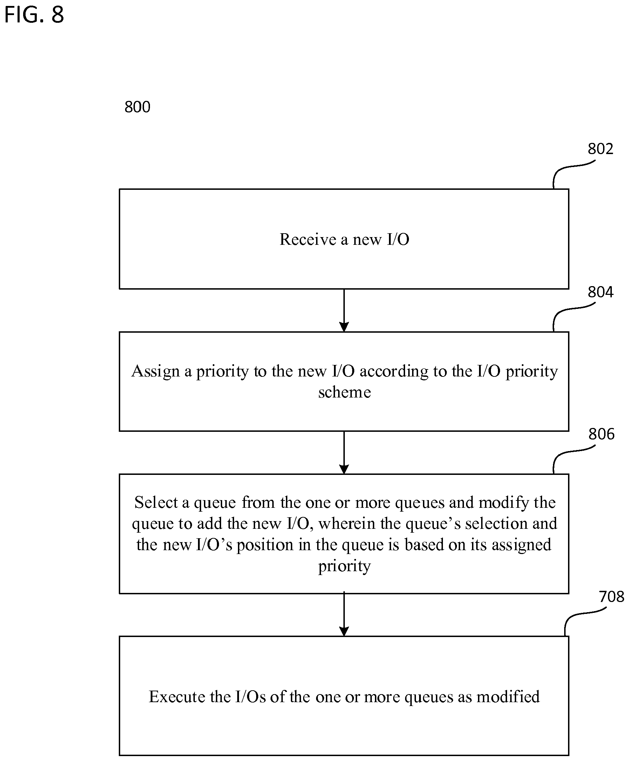

FIG. **8** shows a flowchart **800** in some aspects of this disclosure. It is appreciated that flowchart **800** is exemplary in nature and may thus be simplified for purposes of this explanation.

A storage system controller may be configured to perform the method, or a similar method thereof, as described in flowchart **800** upon a condition that there are pending I/Os on one or more queues waiting to be executed, e.g. pending reads and/or writes.

In **802**, the storage system receives a new I/O (in some aspects, a plurality of I/Os are received and each is processed according to the method described herein). This request (or these requests) may be from an application/client, or may be from the storage system itself for data reallocation purposes, e.g. compaction. In **804**, a priority is assigned to each of the one or more new I/Os according to an I/O priority scheme. In **806**, a queue from the one or more queues is selected and modified to add the new I/O, wherein the queue's selection and the new I/O's position in the queue is based on its assigned priority. In **808**, the pending I/Os are executed in the one or more queues as modified.

It is appreciated that the application of the prioritization policies as described in this disclosure to other hardware and/or standard specific schemes are included in this disclosure.

In the following, various examples are provided with reference to the embodiments described above.
In Example 1, a data storage arrangement including one or more storage media communicatively coupled to one or more processors, the one or more storage media configured to store data using a key-value (KV) system, the one or more processors configured to manage one or more queues comprising a plurality of pending input/outputs (I/Os) for writing to or reading from the one or more storage media, each pending I/O having a respective priority according to an I/O priority scheme; receive a new I/O; assign a priority to the new I/O according to the I/O priority scheme; select and modify a queue of the one or more queues to add the new I/O, wherein the queue's selection and the new I/O's position in the queue is based on its assigned priority; and execute the I/Os of the one or more queues as modified.
In Example 2, the subject matter of Example 1 may include the one or more processors configured to identify the new I/O as a foreground I/O, the new I/O comprising either a client Get or Put command.
In Example 3, the subject matter of Examples 1-2 may include the one or more processors configured to identify the new I/O as a background I/O comprising a read or write to flush a write ahead log (WAL) to the one or more storage media, or a read or write for compacting data from one of a plurality of levels of the storage media to another level of the plurality of levels of the storage media.
In Example 4, the subject matter of Examples 1-3 may include the one or more processors configured to identify each of the pending I/Os as either reads or writes.
In Example 5, the subject matter of Examples 1-4 may include wherein the I/O priority scheme prioritizes foreground I/Os over background I/Os, wherein foreground I/Os comprise reads and/or writes required to process client Get and Put commands, respectively, and background I/Os comprise reads and/or writes for compacting data from one of the plurality of levels of the storage media to another level of the plurality of levels of the storage media.
In Example 5, the subject matter of Example 5 may include wherein background I/Os comprise reads and/or writes to flush a write ahead log (WAL) to the one or more storage media.
In Example 7, the subject matter of Examples 1-6 may include wherein the I/O priority scheme prioritizes reads over writes.
In Example 8, the subject matter of Examples 5-7 may include wherein the I/O priority scheme prioritizes reads and/or writes for compacting data from higher levels of the storage media over lower levels of the storage media, wherein higher levels comprise more recent writes.
In Example 9, the subject matter of Examples 1-8 may include wherein a highest level is a first level of the plurality of levels comprising more recent writes, and each subsequent level of the plurality of levels comprises a larger data capacity than its preceding level.
In Example 10, the subject matter of Examples 1-9 may include the one or more processors configured to map a plurality of the priorities of the I/Os in the queue to a smaller number of options.
In Example 11, the subject matter of Example 10 may include the one or more processors further configured to implement a starvation-prevention mechanism for executing the I/Os of the one or more queues.
In Example 12, the subject matter of Examples 10-11 may include wherein the priorities of each of the smaller number of options represent an order indicating the priorities of each I/O of the plurality of I/Os.
In Example 13, the subject matter of Examples 10-12 may include the one or more processors configured to map the plurality of the priorities of the I/Os in the one or more queues to the smaller number of options based on an available number of queues.
In Example 14, the subject matter of Examples 10-13 may include the one or more processors configured to apply a weighted round robin (WRR) scheme for the mapping to the smaller number of options.
In Example 15, the subject matter of Examples 1-14 may include the one or more processors configured to tailor the prioritization scheme specific to one or more storage media hardware.
In Example 16, the subject matter of Example 15 may include wherein at least one of the one or more storage media hardware operates according to a Non-Volatile Memory Express (NVMe) protocol.
In Example 17, the subject matter of Examples 1-16 may include wherein the one or more queues comprises a plurality of queues.
In Example 18, the subject matter of Example 17 may include wherein a greater number of queues of the plurality of queues are allocated to higher priority I/Os.
In Example 19, the subject matter of Examples 17-18 may include wherein foreground I/Os comprising client Get or Put commands are allocated more queues of the plurality of queues than background I/Os comprising background reads or writes.
In Example 20, a data storage controller including one or more processors configured to manage one or more queues comprising a plurality of pending input/outputs (I/Os) for writing to or reading from a data storage arrangement (e.g. one or more storage media) communicatively coupled to the data storage controller, each pending I/O having a respective priority according to an I/O priority scheme; receive a new I/O; assign a priority to the new I/O according to the I/O priority scheme; select and modify one of the one or more queues to add the new I/O, wherein the new I/O's position in the one queue is based on its assigned priority; and execute the I/Os of the one or more queues as modified.
In Example 21, the subject matter of Example 20 may include the one or more processors configured to identify the new I/O as a foreground I/O, the new I/O comprising either a client Get or Put command.
In Example 22, the subject matter of Examples 20-21 may include the one or more processors configured to identify the new I/O as a background I/O comprising a read or write to flush a write ahead log (WAL) to the one or more storage media, or a read or write for compacting data from one of a plurality of levels of the storage media to another level of the plurality of levels of the storage media.
In Example 23, the subject matter of Examples 20-22 may include the one or more processors configured to identify each the pending I/Os as either reads or writes.
In Example 24, the subject matter of Examples 20-23 may include wherein the I/O priority scheme prioritizes foreground I/Os over background I/Os, wherein foreground I/Os comprise reads and/or writes required to process client Get and Put commands, respectively, and background I/Os comprise reads and/or writes for compacting data from one of the plurality of levels of the storage media to another level of the plurality of levels of the storage media.
In Example 25, the subject matter of Example 24 may include wherein background I/Os comprise reads and/or writes to flush a write ahead log (WAL) to the one or more storage media.
In Example 26, the subject matter of Examples 20-25 may include wherein the I/O priority scheme prioritizes reads over writes.
In Example 27, the subject matter of Examples 24-26 may include wherein the I/O priority scheme prioritizes reads and/or writes for compacting data from higher levels of the storage media over lower levels of the storage media, wherein higher levels comprise more recent writes.
In Example 28, the subject matter of Examples 20-27 may include wherein a highest level is a first level of a plurality of levels of the one or more storage media comprising more recent writes, and each subsequent level of the plurality of level comprises a larger data capacity than its preceding level.
In Example 29, the subject matter of Examples 20-28 may include the one or more processors configured to map a plurality of the priorities of the I/Os in the one or more queues to a smaller number of options.
In Example 30, the subject matter of Example 29 may include the one or more processors further configured to implement a starvation-prevention mechanism for executing the I/Os of the one or more queues.
In Example 31, the subject matter of Examples 29-30 may include wherein the priorities of each of the smaller number of options represent an order indicating the priorities of each I/O of the plurality of I/Os.
In Example 32, the subject matter of Examples 29-31 may include the one or more processors configured to map the plurality of the priorities of the I/Os in the one or more queues to the smaller number of options based on an available number of queues.
In Example 33, the subject matter of Examples 29-32 may include the one or more processors configured to apply a weighted round robin (WRR) scheme for the mapping to the smaller number of options.
In Example 34, the subject matter of Examples 20-33 may include he one or more processors configured to tailor the prioritization scheme specific to one or more storage media hardware.
In Example 35, the subject matter of Example 34 may include wherein at least one of the one or more storage media hardware operates according to a Non-Volatile Memory Express (NVMe) protocol.
In Example 36, the subject matter of Examples 20-35 may include wherein the one or more queues comprises a plurality of queues.
In Example 37, the subject matter of Example 36 may include wherein a greater number of queues of the plurality of queues are allocated to higher priority I/Os.
In Example 38, the subject matter of Example 37 may include wherein foreground I/Os comprising client Get or Put commands are allocated more queues of the plurality of queues than background I/Os comprising background reads or writes.
In Example 39, a method for managing (e.g. reading and/or writing, storing) data in a data storage arrangement, the method including managing one or more queues each comprising a plurality of pending input/outputs (I/Os) for writing to or reading from the data storage arrangement (e.g. one or more storage media), each pending I/O having a respective priority according to an I/O priority scheme; receiving a new I/O; assigning a priority to the new I/O according to the I/O priority scheme; selecting a queue from the one or more queues and modifing the queue to add the new I/O, wherein the queue's selection and the new I/O's position in the queue is based on its assigned priority; and executing the I/Os of one or more queues as modified.
In Example 40, the subject matter of Example 39 may include identifying the new I/O as a foreground I/O, the new I/O comprising either a client Get or Put command.
In Example 41, the subject matter of Examples 39-40 may include identifying the new I/O as a background I/O comprising a read or write to flush a write ahead log (WAL) to the one or more storage media, or a read or write for compacting data from one of a plurality of levels of the storage media to another level of the plurality of levels of the storage media.
In Example 42, the subject matter of Examples 39-41 may include identifying each of the pending I/Os as either reads or writes.
In Example 43, the subject matter of Examples 39-42 may include wherein the I/O priority scheme prioritizes foreground I/Os over background I/Os, wherein foreground I/Os comprise reads and/or writes required to process client Get and Put commands, respectively, and background I/Os comprise reads and/or writes for compacting data from one of the plurality of levels of the storage media to another level of the plurality of levels of the storage media.
In Example 44, the subject matter of Example 43 may include wherein background I/Os comprise reads and/or writes to flush a write ahead log (WAL) to the one or more storage media.
In Example 45, the subject matter of Examples 39-44 may include wherein the I/O priority scheme prioritizes reads over writes.
In Example 46, the subject matter of Examples 43-45 may include wherein the I/O priority scheme prioritizes reads and/or writes for compacting data from higher levels of the storage media over lower levels of the storage media, wherein higher levels comprise more recent writes.
In Example 47, the subject matter of Examples 39-46 may include wherein a highest level is a first level of the plurality of levels comprising more recent writes, and each subsequent level of the plurality of levels comprises a larger data capacity than its preceding level.
In Example 48, the subject matter of Examples 39-47 may include further comprising mapping a plurality of the priorities of the I/Os in the queue to a smaller number of options.
In Example 49, the subject matter of Example 48 may include implementing a starvation-prevention mechanism for executing the I/Os of the queue.
In Example 50, the subject matter of Examples 48-49 may include wherein the priorities of each of the smaller number of options represent an order reflecting the priorities of each I/O of the plurality of I/Os.
In Example 51, the subject matter of Examples 48-50 may include mapping the plurality of the priorities of the I/Os in the queue to the smaller number of options based on an available number of queues.
In Example 52, the subject matter of Examples 48-51 may include applying a weighted round robin (WRR) scheme for the mapping to the smaller number of options.
In Example 53, the subject matter of Examples 39-52 may include tailoring the prioritization scheme specific to one or more storage media hardware.
In Example 54, the subject matter of Example 53 may include wherein at least one of the one or more storage media hardware operates according to a Non-Volatile Memory Express (NVMe) protocol.
In Example 55, the subject matter of Examples 39-54 may include wherein the one or more queues comprises a plurality of queues.
In Example 56, the subject matter of Example 55 may include wherein a greater number of queues of the plurality of queues are allocated to higher priority I/Os.
In Example 57, the subject matter of Example 56 may include wherein foreground I/Os comprising client Get or Put commands are allocated more queues of the plurality of queues than background I/Os comprising background reads or writes.
In Example 58, one or more non-transitory computer-readable media storing instructions thereon that, when executed by at least one processor, direct the at least one processor to perform a method or realize a device as claimed in any preceding Example.

While the above descriptions and connected figures may depict device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods/algorithms detailed herein are exemplary in nature, and are thus understood as capable of being implemented in a corresponding device. Likewise, it is appreciated that implementations of devices detailed herein are understood as capable of being implemented as a corresponding method and/or algorithm. It is thus understood that a device corresponding to a method detailed herein may include one or more components configured to perform each aspect of the related method.

All acronyms defined in the above description additionally hold in all claims included herein.

While the invention has been particularly shown and described with reference to specific aspects, it should be understood by those skilled in the art that various changes in form and detail may be made therein without departing from the spirit and scope of the invention as defined by the appended claims. The scope of the invention is thus indicated by the appended claims and all changes, which come within the meaning and range of equivalency of the claims, are therefore intended to be embraced.

## Claims

1. A method for managing data in a Key-Value (KV) data storage arrangement, the method comprising:
managing one or more queues each comprising a plurality of pending input/outputs (I/Os) for writing to or reading from the data storage arrangement, each pending I/O having a respective priority according to an I/O priority scheme;
receiving a new I/O;
assigning a priority to the new I/O according to the I/O priority scheme;
selecting a queue from the one or more queues and modifying the queue to add the new I/O, wherein the queue's selection and the new I/O's position in the queue is based on its assigned priority; and
executing the I/Os of the one or more queues as modified.

2. The method of claim 1, further comprising identifying the new I/O as a foreground I/O, the new I/O comprising either a client Get or Put command.

3. The method of any one of claims 1-2, further comprising identifying the new I/O as a background I/O comprising a read or write to flush a write ahead log (WAL) to the data storage arrangement, or a read or write for compacting data from one of a plurality of levels of the data storage arrangement to another level of the plurality of levels of the data storage arrangement.

4. The method of any one of claims 1-3, wherein a highest level of the data storage arrangement is a first level of the plurality of levels comprising more recent writes, and each subsequent level of the plurality of levels comprises a larger data capacity than its preceding level.

5. The method of any one of claims 1-4, wherein the I/O priority scheme prioritizes foreground I/Os over background I/Os, wherein foreground I/Os comprise reads and/or writes required to process client Get and Put commands, respectively, and background I/Os comprise reads and/or writes for compacting data from one of the plurality of levels of the data storage arrangement to another level of the plurality of levels of the data storage arrangement.

6. The method of claim 5, wherein background I/Os comprise reads and/or writes to flush a write ahead log (WAL) to the data storage arrangement.

7. The method of claim 5, wherein the I/O priority scheme prioritizes reads and/or writes for compacting data from higher levels of the data storage arrangement over lower levels of the data storage arrangement, wherein higher levels comprise more recent writes.

8. The method of any one of claims 1-4, further comprising mapping a plurality of the priorities of the I/Os in the queue to a smaller number of options.

9. The method of claim 8, further comprising mapping the plurality of the priorities of the I/Os in the queue to the smaller number of options based on an available number of queues.

10. The method of claim 8, further comprising applying a weighted round robin (WRR) scheme for the mapping to the smaller number of options.

11. The method of any one of claims 1-5, wherein the one or more queues comprises a plurality of queues, wherein a greater number of queues of the plurality of queues are allocated to higher priority I/Os.

12. A data storage controller comprising one or more processors configured to:
manage one or more queues comprising a plurality of pending input/outputs (I/Os) for writing to or reading from a data storage arrangement communicatively coupled to the data storage controller, each pending I/O having a respective priority according to an I/O priority scheme;
receive a new I/O;
assign a priority to the new I/O according to the I/O priority scheme;
select and modify a queue of the one or more queues to add the new I/O, wherein the queue's selection and the new I/O's position in the queue is based on its assigned priority; and
execute the I/Os of the one or more queues as modified.

13. The data storage controller of claim 12, the one or more processors configured to identify the new I/O as a background I/O comprising a read or write to flush a write ahead log (WAL) to the data storage arrangement, or a read or write for compacting data from one of a plurality of levels of the data storage arrangement to another level of the plurality of levels of the data storage arrangement.

14. The data storage controller of any one of claims 12-13, wherein the I/O priority scheme prioritizes foreground I/Os over background I/Os, wherein foreground I/Os comprise reads and/or writes required to process client Get and Put commands, respectively, and background I/Os comprise reads and/or writes for compacting data from one of the plurality of levels of the data storage arrangement to another level of the plurality of levels of the data storage arrangement.

15. Machine-readable storage including machine-readable instructions, when executed, to implement a method or realize an apparatus as claimed in any preceding claim.
